# EUROPEAN PATENT SPECIFICATION

(11) **EP 2 902 630 B1**
(45) Date of publication and mention of the grant of the patent: **03.01.2018**
(21) Application number: 14425006.5
(22) Date of filing: 29.01.2014
(51) Int. Cl.: F04D 13/08, F04D 15/00, F04D 15/02, D06F 58/24, D06F 58/28, H02P 27/02, A47L 15/42, D06F 25/00, H02M 5/257

(54) **Method for detecting a low-load condition in a pump, in particular a condensate discharge pump embodied in a condensate collection system, and motor-pump assembly**
Verfahren zur Erkennung der Unterlastbedingung in einer Pumpe, insbesondere in der Kondensatpumpe einer Kondensatsammelanlage, sowie Motor-pumpengruppe
Méthode de détection de condition de faible charge d'une pompe, en particulier une pompe à condensat intégrée dans un système de collecte de condensat, et groupe moteur-pompe

(43) Date of publication of application: 05.08.2015
(73) Proprietor: Askoll Holding S.r.l. a socio unico, 36031 Povolaro di Dueville (VI) (IT)
(72) Inventor: MARIONI, Elio, 36031 Dueville (Vicenza) (IT)
(74) Representative: Antonucci, Emanuele

(56) References cited:
- EP-A1- 2 439 840
- FR-A1- 2 896 048
- US-A- 4 841 404
- US-A1- 2002 093 306
- US-A1- 2007 172 360

## Description

### Field of application

The present invention relates, in its most general aspect, to a method for detecting a low load condition of a pump actuated by a synchronous electric motor.

The present invention also relates to a method for collecting condensate inside an apparatus equipped with a condensate collection system, for example a laundry drying machine or an air conditioner, which applies the aforementioned method for detecting a low load condition.

The present invention relates furthermore to a motor-pump assembly specifically intended to implement the above-mentioned mentioned for detecting a low load condition.

As mentioned above, the invention is intended therefore in particular for the sector of laundry washing or washing/drying machines, or for the sector of air conditioners, in particular portable air conditioners equipped with an internal condensate collection system. In more general terms, the invention falls within the technological sector of electric household appliances.

### Prior Art

Various apparatuses, used in a domestic and/or industrial environment, collect internally condensation water resulting either from a process for conditioning the ambient air, as in the case of portable air conditioners, or from a tumble-drying cycle, as in the case of drying or washing/drying machines.

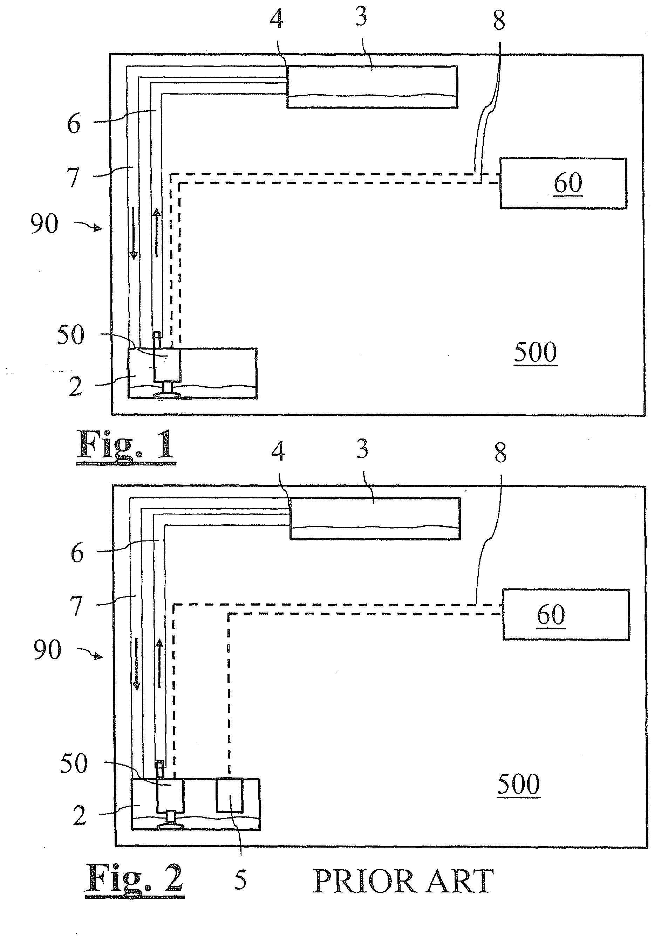

A condensate collection system 90 which is commonly used in apparatuses 500 of the above-mentioned type is shown in Figure 2 of the present application. The condensation water resulting from operation of the apparatus 500, for example a portable air conditioner or a tumble dryer, flows due to gravity into a bottom tank 2. The condensation water is then cyclically conveyed, via a suitable condensate discharge pump 50, to a top tank 3 which has a drawer-like configuration and which can be easily emptied by the user.

The condensate discharge pump 50 is typically controlled directly by the main control board 60 of the apparatus 500. Generally, the condensate discharge pump 50 is activated at regular intervals during operation of the apparatus and, whenever activated, is kept in operation for a predetermined time interval sufficient to empty the bottom tank 2.

If the top tank 3, however, cannot be emptied regularly, it may happen that it fills up beyond a threshold level. In this case, in order to prevent overflowing that could damage the electronic components of the apparatus 500, an overflow system 4 is provided so that any excess liquid is returned to the bottom tank 2.

In order to prevent the bottom tank 2 from overflowing, which is less critical but still undesirable, a float-type level sensor 5 is also housed inside said tank. When a threshold level is reached, the float sensor forwards a signal to the main control board 60 which in turn stops the apparatus 500 and signals the full condition to the user.

The system described above, although substantially satisfying the requirements of the sector, nevertheless has a number of drawbacks mainly associated with the presence of the float sensor.

This float sensor in fact generates additional costs with regard to manufacture of the apparatus, said costs being due both to the component itself and to the need to connect it to the main control board via a specific cabling.

Another drawback arises from the possibility of jamming or incorrect operation of the float sensor, which, as well as giving rise to extraordinary maintenance costs, may also result in lack of signalling of the full condition with consequent overflowing of the collected condensation water.

A further drawback arises from the rigid procedure for activation of the condensate discharge pump, which involves a very long set activation time even when the amount of condensate collected inside the bottom tank is minimal or even non-existent. This results in an energy consumption which could to a large extent be avoided.

A method for collecting the condensate inside an apparatus which solves the drawbacks of the prior art highlighted above has been proposed by the applicant in the prior European patent application number 13425078.6.

This method proposes in particular:
- providing a condensate collection system comprising: a bottom collection tank and a top collection tank; a condensate discharge pump intended to displace liquid from the bottom collection tank into the top collection tank; and an overflow system which causes the displacement of the liquid contained in the top collection tank and exceeding an overflow level towards the bottom collection tank;
- collecting a condensate liquid during operation of said apparatus inside the bottom collection tank;
- actuating said condensate discharge pump so as to displace said condensate liquid from the bottom collection tank to the top collection tank;
- at the same time as the step of actuating said condensate discharge pump, detecting a low load condition of said condensate discharge pump, the actuation of the condensate discharge pump being interrupted upon detection of this low load condition;
- at the same time as the step of actuating said condensate discharge pump, performing a measurement of the actuating time of the condensate discharge pump, signalling a full condition of the condensate collection system when this actuating time exceeds a maximum time.

In the method proposed above, the detection of the low load condition of the condensate collection pump is particularly critical. It must be preferably performed without using sensors so as to avoid an excessive cost of the device, and at the same time ensure precision and reliability such as to allow efficient implementation of the said method.

In the aforementioned application it is suggested performing the detection by means of a threshold check of the instantaneous firing angle used during phase-control driving of the synchronous motor which rotationally operates the pump.

However, the threshold which defines an effective low load condition is variable depending on at least three different parameters, in particular:
- the grid power supply voltage;
- the quantity of liquid still present in the collection tank; and finally
- the length of the pipe which connects the condensate discharge pump to the top collection tank.

The effect of the first parameter may be partly compensated for by adopting a variable threshold, depending on the instantaneous grid voltage, but this would increase the computational complexity of the control system.

The effect of the second parameter cannot be compensated for unless a level sensor is incorporated again, but this would cancel out the advantages obtained by the method introduced.

The last parameter, finally, requires dedicated calibration of the motor control board with respect to the dimensions of the specific condensate collection system.

In practice, it has been found that the variability of the aforementioned parameters does not allow a precise distinction between the full load and the low load condition, therefore preventing this information from being used to switch off the pump beforehand.

The technical problem forming the basis of the present invention is therefore that of devising a method for detecting a low load condition of a pump actuated by a synchronous electric motor, which allows efficient implementation of the condensate collection method proposed by the Applicant in the preceding European patent application number 13425078.6.

### Summary of the invention

The aforementioned technical problem is solved by a method for detecting a low load condition of a pump actuated by a synchronous electric motor, comprising the following steps:
steady-state driving of said electric motor by means of phase-cutting control, a feedback setpoint thereof being a condition of minimum phase-shift between current supplying the windings of the electric motor and generated counter-electromotive force;
detecting at least two firing angles successively applied, in relation to said phase-cutting control, during two successive half-periods of a voltage supplying the electric motor;
calculating at least one variation between two consecutive firing angles previously detected;
comparing said variation, or the sum of said successive variations, with a threshold value, where reaching or exceeding said threshold value identifies said low load condition.

This threshold value is preferably predefined and may indicate operation of the pump under no load or operation of the pump in air/water conditions.

The method according to the present invention is therefore no longer based on the concept of exceeding a limit firing angle, but on the difference in this angle between two successive half-periods, thus resolving the problems associated with the variability of the limit threshold of the firing angle.

The steps of detecting the firing angles and calculating the corresponding variations may be repeated continuously for a measurement period (of between 5s and 15s for example) at the end of which the comparison between the sum of the variations calculated during the course of said measurement period and the threshold value is performed.

The aforementioned electric motor is a synchronous electric motor, preferably a permanent-magnet, single phase motor. Although the aforementioned method may be applied to pumps of another type, it is mainly intended for a condensate discharge pump. The present invention also relates to a motor-pump assembly comprising a pump, a permanent-magnet, single-phase, synchronous electric motor intended for operation thereof, and a local control board intended to drive said electric motor, where said local control board is also intended to: detect, during operation of the pump, a low load condition of said condensate discharge pump by means of the method described above.

The present invention also relates to a method for collecting the condensate inside an apparatus, said method comprising the following steps:
- providing a condensate collection system comprising: a bottom collection tank and a top collection tank; a condensate discharge pump intended to displace liquid from the bottom collection tank to the top collection tank; and an overflow system which causes displacement of the liquid contained in the top collection tank and exceeding an overflow level into the bottom collection tank;
- collecting a condensed liquid during operation of said apparatus in the bottom collection tank;
- actuating said condensate discharge pump so as to displace said condensed liquid from the bottom collection tank into the top collection tank;
- at the same time as the step of actuating said condensate discharge pump, detecting a low load condition of said condensate discharge pump, by applying the method described above, actuation of the condensate discharge pump being interrupted upon detection of said low load condition;
- at the same time as the step of actuating said condensate discharge pump, performing a measurement of the actuating time of the condensate discharge pump, with signalling of a full condition of the condensate collection system when this actuating time reaches or exceeds a maximum time.

As a person skilled in the art can appreciate, the method outlined above uses a method for detecting the load of the condensate discharge pump which allows operation thereof to be interrupted when the low load indicates that the bottom collection tank is empty.

Owing to this detection, it is easy to determine the full condition of the condensate collection system without having to use the float-type level sensor used in the prior art. In fact, in the event of the collection system being completely full, continuous recirculation of the condensed liquid between the bottom tank and top tank takes places, and the low load conditions which determine switching-off of the condensate discharge pump are never reached. This results in the duty cycle of the pump being indefinitely prolonged, this being detected by the system electronics and generating a suitable diagnostic signal.

Signalling of a full condition of the condensate collection system preferably causes the apparatus to be halted.

The low load condition, depending on implementation of the method, may correspond to operation of the condensate discharge pump under zero load or operation of the condensate discharge pump in air/water conditions.

In particular, said step of detecting the low load condition of the condensate discharge pump may be directly performed by a local control board installed on the condensate discharge pump itself, preferably without the use of sensors.

The method for automatic detection of the electric pump load, which is particularly advantageous in connection with the present invention, is disclosed in patent application EP 2 439 840 in the name of the same applicant.

This step of performing a measurement of the actuating time of the condensate discharge pump may also be carried out by the local control board; in that case, the entire control architecture of the condensate collection system is advantageously integrated in the condensate discharge pump.

Alternatively, the step of performing a measurement of the actuating time of the condensate discharge pump may be carried out by a main control board of the apparatus also intended to control other electronic devices installed in the apparatus.

The actuating state of the condensate discharge pump may be determined without using sensors, for example by means of a two logic state current measurement along the circuit section which powers the electric motor of the condensate collection pump.

In this case the advantage of not having to provide a signal cable between the local control board and the main control board of the apparatus is obtained.

In the method according to the present invention, said step of actuating said condensate discharge pump may be performed cyclically during operation of the apparatus, for example at regular intervals, where preferably these intervals correspond to the estimated time for filling of the bottom collection tank during operation of the apparatus.

The maximum actuating time of the condensate discharge pump defined above is preferably equal to or greater than the actuating time of the condensate discharge pump needed to empty completely the bottom discharge tank in the fully filled condition.

The aforementioned technical problem is also solved by an apparatus equipped with a condensate collection system comprising:
a bottom collection tank intended to collect the condensed liquid during operation of said apparatus; a top collection tank; a condensate discharge pump intended to displace liquid from the bottom collection tank to the top collection tank; and an overflow system which causes displacement into the bottom collection tank of the liquid contained in the top collection tank that exceeds an overflow level;
said apparatus comprising electronic control devices intended to:
   actuate said condensate discharge pump so as to displace said condensed liquid from the bottom collection tank into the top collection tank;
   detect, during actuation of the condensate discharge pump, a low load condition of said condensate discharge pump, according to the methods defined above, and interrupt actuation of the condensate discharge pump upon detection of said low load condition;
   perform, during actuation of the condensate discharge pump, a measurement of the actuating time of the condensate discharge pump, and signal a full condition of the condensate collection system when this actuating time exceeds a maximum time.

Further characteristic features and advantages of the present invention will emerge from the following description of a preferred example of an embodiment, provided by way of a non-limiting example, with reference to the accompanying drawings.

### Brief description of the drawings

Figure 1 shows in schematic form an apparatus provided with a condensate collection system according to the present invention;
Figure 2 shows in schematic form an apparatus equipped with a condensate collection system according to the prior art;
Figure 3 shows a block diagram which summarizes the various steps of the condensate collection method according to the present invention;
Figure 4 shows a block diagram which summarizes the various steps of the method for detecting the low load conditions of a synchronous electric pump according to the present invention;
Figure 5 shows in schematic form a local control board integrated in a motor-pump assembly according to the present invention;
Figure 6 shows the time progression of a number of parameters relating to the motor-pump assembly according to Fig. 5 during a step of the methods illustrated in Figures 3 and 4.

### Detailed description

With reference to Figure 1, 500 identifies a generic apparatus provided internally with a condensate collection system 90.

As mentioned above, the apparatus 500 may take the form of various devices which are different from each other in terms of type and function, but which have the common feature that they need to collect a condensation liquid resulting from the more or less continuous operation thereof.

By way of example, in the present detailed description reference will be made to the apparatus 500 in the form of a laundry drying machine; it is understood, however, that a collection system 90 with similar operating modes may be applied to other apparatuses for domestic and/or industrial use, such as a portable air conditioner.

The condensate collection system 90 of the laundry drying machine 500 has, in a known manner, a bottom collection tank 2 and a top collection tank 3 which are in fluid communication with each other.

The bottom collection tank 2 is arranged at the bottom of the laundry drying machine, underneath a heat exchanger. Inside the exchanger, the steam coming from the laundry drum is cooled and converted into condensation water that gradually fills the underlying bottom collection tank 2.

A condensate discharge pump 50 is provided in order to convey the accumulated condensed liquid from the bottom of said bottom collection tank 2 to the top collection tank 3 via a delivery pipe 6.

The top collection tank 3, which is preferably arranged on the same level as the control panel of the laundry drying machine 500, is designed so that it can easily be emptied by the operator; for example it may be in the form of an extractable drawer.

Also to be noted is the presence of an overflow system 4 which returns, via a return pipe 7, the condensation liquid exceeding a threshold level from the top collection tank 3 to the bottom collection tank 2. This overflow system 4 may be defined by a spillway formed in the top collection tank 3; when the condensation liquid reaches the spillway, it returns into the bottom collection tank 2 via the return pipe 7 by means of simple gravitational action.

The condensate discharge pump 50, of the known type, is actuated by means of an electric motor 1 which, in the case in question, takes the form of a permanent-magnet single-phase synchronous motor.

An electronic device 20, which is preferably in the form of a local control board, is associated with the electric motor 1 and is intended to drive it by means of phase-cutting control.

The condensate discharge pump 50, the electric motor 1 and the local control board 20 are incorporated in a motor-pump assembly that can be handled separately, of the type described in patent application EP 2 439 840 filed in the name of the same applicant.

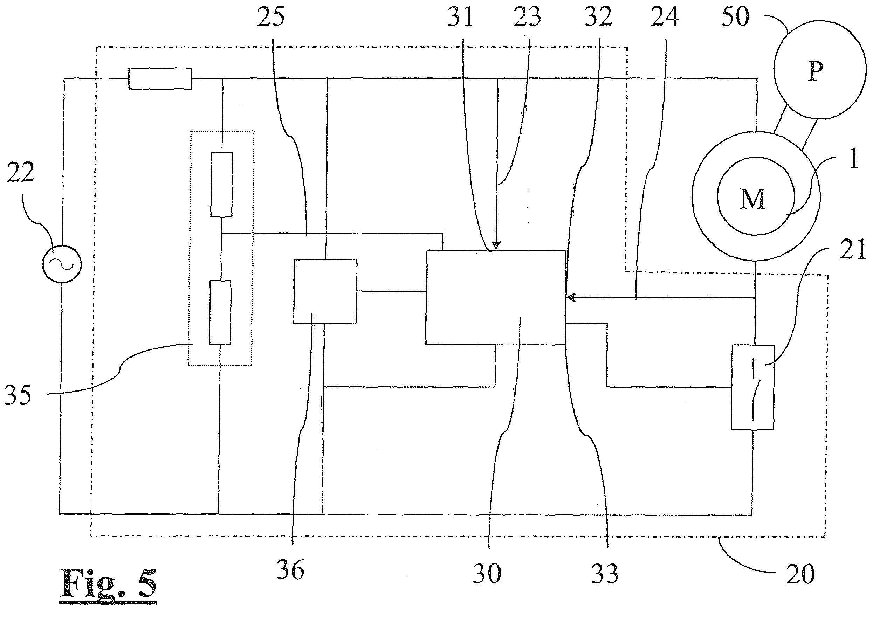

The local control board 20, which may be seen in detail in Figure 5, comprises a static switch 21, in this specific case a TRIAC switch, intended to cut the current supplied by an AC electrical grid 22 and directed to the windings supplying power to the electric motor 1.

The TRIAC switch 21 is connected to a PWM output 33 of a processing unit 30, which preferably takes the form of a microprocessor.

The local control board 20 has a portion for synchronisation with the grid 35 which sends to the processing unit 30 a grid synchronisation signal 25, i.e. a signal having a unitary value when the voltage of the power supply grid has positive values, and a zero value when the latter has negative values; the timer for controlling the PWM output 33 is advantageously synchronised with the grid synchronising signal. Moreover, the local control board 20 has a power supply portion 36 of the processing unit 30, also intended to supply said unit with a voltage reference signal.

The processing unit 30 has a first input 31, which receives a grid voltage signal 23, and a second input 32, which instead receives a voltage signal across the switch 24.

By processing these signals, the processing unit 30 is able to carry out an indirect measurement of the counter-electromotive force generated by the synchronous motor 1, obtained as the difference between the grid voltage signal 23 and the voltage signal on the switch 24, at the moments when the current is zero. The processing unit 30 detects said zero current condition by again by evaluating the voltage signal across the switch 24, and in particular by ensuring that this signal differs sufficiently from the zero value.

In addition to the local control board 20 described above, the laundry drying machine 500 comprises a main control board 60 intended to control all the electronic functions of the machine.

This main control board 60 is arranged in a front top position corresponding to the control panel of the laundry drying machine 500, i.e. it is situated at a distance from the motor-pump assembly which is instead located in the vicinity of the bottom collection tank 2.

The main control board 60 is connected by means of suitable cabling 8 to the local control board 30 of the motor-pump assembly. The cabling may comprise, in addition to the pump power wiring, also one or more signal cables; these cables are, however, not strictly necessary, as will become clear from the following description.

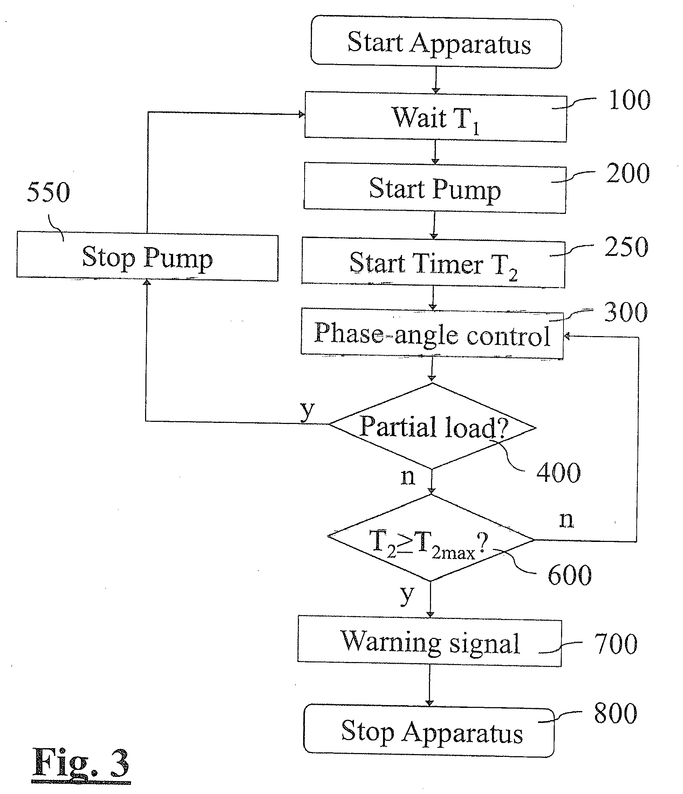

With reference to the attached Figure 3, a method of preferred operation of the condensate collection system described above is now described.

This method preferably envisages a cyclical actuation of the condensate discharge pump 50 during operation of the laundry-drying machine 500. Then a waiting step 100 is provided to allow a wait time T₁ to elapse between one actuating operation of the condensate discharge pump 50 and the next one. This wait time T₁ is determined on the basis of the estimated filling time for the bottom collection tank 2.

It should be noted that cyclical actuation of the condensate discharge pump 50 is not necessarily envisaged for the entire period of operation of the laundry drying machine, but concerns only a number of operating cycles during which condensation is produced inside the machine.

In the example of embodiment described here, the wait time T₁ may be between 100 s and 160 s.

Once said wait time has elapsed, the method according to the present invention includes a step (step 200 in Figure 3) for start-up of the electric motor 1, which actuates the condensate discharge pump 50.

This start-up step is preferably performed in the manner described in patent application EP 2 439 840 and is briefly described below.

The start-up step comprises four successive sub-steps: alignment, waiting, starting, transition towards steady-state operation.

The alignment sub-step is intended to bring the rotor of the electric motor 1 into a predefined starting position.

In order to achieve this result, the processing unit 30 controls the TRIAC switch 21 so as to supply the power windings of the motor with a series of current pulses generated only during a given half-period, which is positive or negative depending on the selected starting position, of the voltage signal of the electrical grid 22. In terms of application, the TRIAC switch must therefore be switched on only when the grid synchronising signal 23 assumes a positive value (or negative value depending on the selected half-period).

The subsequent waiting sub-step is intended to allow damping of any oscillations of the rotor of the electric motor 1. At the end of the waiting step, it is thus certain that the rotor has stopped in the predefined starting position.

The subsequent starting sub-step is intended to ensure the actual starting of the electric motor 1.

For this purpose, the processing unit 30 generates a series of current pulses of increasing intensity (adjusted by varying the firing angle α during phase-cutting control), these pulses being generated this time in the half-period of the voltage signal of the electrical grid 22 opposite to that of the pulses of the alignment step.

When the signal of the counter-electromotive force exceeds a predetermined control threshold, the last sub-step of transition towards steady-state operation begins.

If, on the other hand, the control threshold for the counter-electromotive force is not reached by the end of the series, the implemented control method carries out the initial start-up sub-steps again.

The last sub-step is intended to drive the motor until the synchronism speed is reached.

In this last sub-step, the processing unit 30 controls the motor according to a specific activation logic which tends to keep the TRIAC switch 21 conducting only when the transit of current in the power windings of the electric motor 1 determines a drive torque in the direction of rotation of the rotor.

In particular, the TRIAC switch 21 is switched on when both of the following conditions occur:
a) the estimated signal of the counter-electromotive force must have the same sign as the grid voltage;
b) the estimated signal of the counter-electromotive force must be moving away from zero.

Once the synchronism condition of the synchronous electric motor 1 has been reached, start-up is complete.

Such a condition is assessed by means of a measurement of the phase shift between phase current and voltage. If this phase shift remains more or less constant for a given number of consecutive periods, the synchronism condition is considered to have been reached. If the synchronism condition is not reached within a predefined time period, the method carries out the start-up step again from the beginning.

After the start-up step described above, the method envisages a step of driving the synchronous electric motor 1 at steady state by means of phase-cutting control, i.e. by varying the firing angle α which determines the delay in switching on of the TRIAC switch with respect to the change of sign of the grid voltage.

Phase-cutting control is gradually introduced, keeping the conditions a) and b) upon switching-on of the switch 21 applied in the aforementioned transition sub-step.

During this driving step, which is indicated by 300 in Figure 3, the firing angle α is feedback-controlled in order to optimise the energy performance of the electric motor 1.

More specifically, the feedback control is performed by identifying the ideal operating condition of the motor as being one in which the counter-electromotive force passes through zero at a mid-point of the zero current plateau set by closing of the TRIAC switch 21. Obviously, the extension of the zero current plateau and the relative position of its mid-point depend on the value of the firing angle α used for each current half-period.

The sought-after condition corresponds to zeroing of the phase shift between the current supplying the windings and the generated counter-electromotive force of the synchronous motor 1, a condition which, as is known, ensures that the energy efficiency of the synchronous motor itself is optimised (disregarding the core losses).

Owing to the signal of counter-electromotive force processed internally in the manner described above, the processing unit 30 is able to evaluate how the behaviour of the motor differs from the ideal operating condition, consequently correcting in feedback the firing angle α of the TRIAC switch 21.

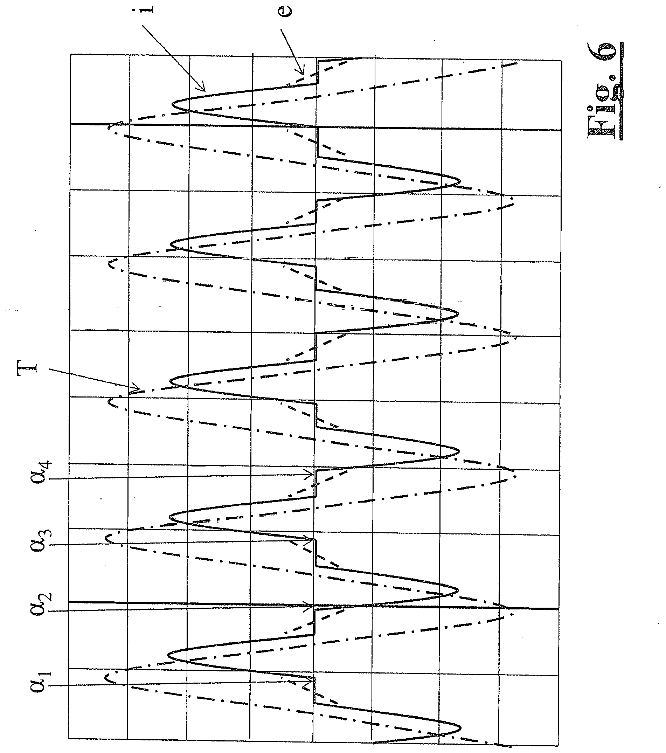

Figure 6 illustrates the temporal progression of the counter-electromotive force e of the grid voltage T and the stator current i during steady-state operation of the synchronous motor 1; the firing angles used in the first half-periods are indicated by the Greek letter α followed by progressively increasing subscripts.

During steady-state driving, the method according to the present invention continuously checks that the synchronous motor 1 has not reached a low load condition which indicates emptying of the bottom collection tank 2 (check step 400 in Figure 3).

When the bottom collection tank 2 no longer contains condensation liquid or contains a minimum amount thereof, the condensate discharge pump 50 operates under zero load or in air/water conditions, with a consequent reduction in load compared to full flow operating conditions.

In such conditions, the decrease in load causes a great increase in the need to cut the current in the feedback control algorithm and therefore a great discontinuity in the firing angle α compared to the limited oscillations of this value which occur in full load conditions.

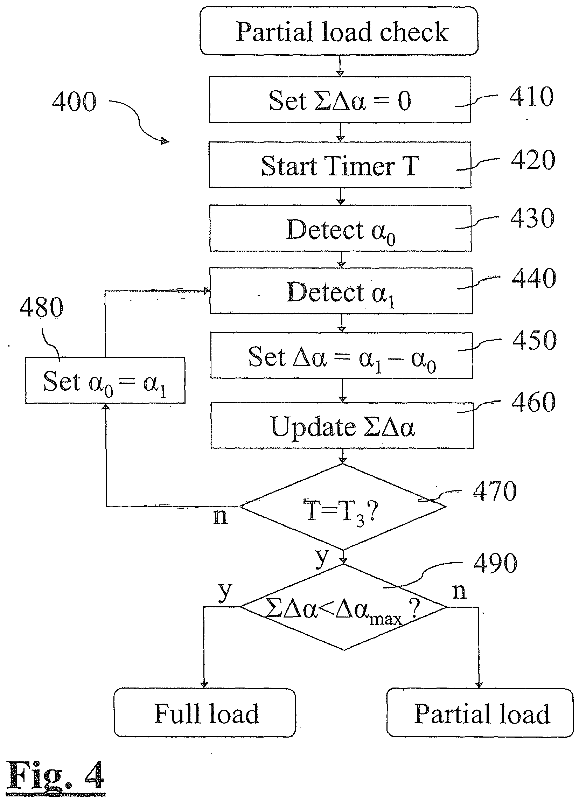

Precisely on the basis of the variations of the firing angle α during the subsequent half-periods of the supply voltage T, the algorithm according to the present invention, which is shown in detail in Figure 4, defines the low load conditions of the condensate discharge pump 50. During a first step 410 of this method, a variable ΣΔα which identifies the sum of the variations in the firing angle α during the successive half-periods is initialized.

Then, a second step 420 is provided for initialising a timer intended to measure a preset measurement time T₃ which in the embodiment described here is equal to 10 s.

This is followed by execution of the steps 430, 440 for acquiring a first firing angle α₀ and a successive firing angle α₁ for two consecutive half-periods.

On the basis of these measurements, a step 450 for calculating a variation Δα of the firing angle during the last half-period is performed; during a following step 460 this variation is incorporated in the calculation of the sum of the variations ΣΔα.

If the entire measurement time T₃ has not yet elapsed (check step 470), an updating step 480 is carried out where the value of the last firing angle detected replaces the penultimate value and then the following firing angle is reacquired and the calculation of the variation is repeated, updating the sum ΣΔα.

Once the measurement time T₃ has lapsed, a check step 490 is carried out to compare the resultant value of the sum Δαₘₐₓ with that of a preset threshold value Δαₘₐₓ which identifies the low load operation of the pump.

If the sum ΣΔα remains below said threshold value Δαₘₐₓ, full load operation of the condensate discharge pump 50 is established; vice versa, a same or higher value indicates operation of the pump in air/water conditions, or even operation under zero load, depending on the threshold value Δαₘₐₓ adopted.

When the aforementioned check detects operation in low load conditions, the bottom collection tank 2 is considered to be empty and actuation of the condensate discharge pump 50, or the electronic device 20, interrupts the supply of power to the windings of the synchronous motor 1 (step 550 in Figure 3).

The time variable that measures the wait time T₁ between one actuating operation of the condensate discharge pump 50 and the next one is then reset and the method is cyclically repeated starting from the aforementioned wait step (step 100 in Figure 3).

Again during steady-state operation, the method according to the present invention checks in real time that the condensate collection system 90 has not reached a completely full condition.

In order to perform this check, the method comprises a further check step (check step 600 in Figure 3) in which it checks whether the actuating time T₂ of the condensate discharge pump 50 has not reached or exceeded a maximum time T₂ₗᵢₘ, indicatively equal to or greater than the time needed for a complete emptying of the bottom collection tank 2.

An excessive duration of the actuating time T₂ is in fact an indication of the complete filling of the top collection tank 3. In this condition, the condensate liquid introduced by the condensate discharge pump 50 is immediately evacuated by means of the overflow system 4 and thus reintroduced into the bottom collection tank 2. The action of the pump therefore causes continuous recirculation of the condensation liquid, such that the partial load condition which should cause it to switch-off never occurs and the pump remains switched on indefinitely. Therefore the measured actuating time T₂ rapidly exceeds the maximum time T₂ₗᵢₘ which, in conditions where the condensate collection system 90 is partly filled, should instead ensure that the bottom collection tank 3 is emptied.

Preferably the aforementioned measurement time T₃ is selected from among the submultiples of the aforementioned maximum actuating time T₂ₗᵢₘ.

The timer intended to measure the actuating time T₂ may be activated at the start of the start-up step or when the condition of synchronism of the motor is reached. This step is indicated by step 250 in Figure 3.

In the example embodiment described here, the maximum time T₂ₘₐₓ may be between 10 s and 26 s.

In case where the check step described above identifies an actuating time T₂ greater than the maximum time T₂ₘₐₓ, a diagnostic signal is generated, identifying the fully filled condition of the condensate collection system 90 (step 700 in Figure 3), resulting for example in an indicator lamp lighting up on the control panel of the laundry drying machine 500.

Moreover, in order to prevent the bottom collection tank 2 from overflowing, operation of the laundry drying machine 500 is interrupted (step 800 in Figure 3).

It should be noted that the step of checking the actuating time T₂ of the condensate discharge pump 50 may be performed directly by the local control board 20 installed in the motor-pump assembly or alternatively by the main control board 60 of the laundry-drying machine 500.

In the first variation of embodiment it is necessary to provide a signal cable for sending a diagnostic signal regarding the fully filled condition of the condensate collection system 90 from the local control board 20, which detects the fault, to the main control board 60, which interrupts operation of the laundry drying machine 500 and activates any warning signals or lights.

In the second variation of embodiment, the activation time of the condensate discharge pump 50 is directly monitored by the main control board 60 which is able to detect the operating state of the electric motor 1 by performing a two logic state current measurement along the relevant circuit section. In this embodiment a signal cable between the local control board 20 and the main control board 60 is not required.

Obviously, a person skilled in the art, in order to satisfy any specific requirements which arise, may make numerous modifications and variations to the method and device described above, all of which however fall within the scope of protection of the invention, as defined by the following claims.

## Claims

1. Method (400) for detecting a low load condition of a pump actuated by a synchronous electric motor (1), comprising the following step:
steady-state driving of said electric motor (1) by means of phase-cutting control, a feedback setpoint thereof being a condition of minimum phase-shift between current supplying the windings of the electric motor (1) and generated counter-electromotive force;
**characterized in that** it further comprises the steps of:
detecting (430, 440) at least two firing angles (α₀, α₁) successively applied, in relation to said phase-cutting control, during two successive half-periods of a voltage (T) supplying the electric motor (1);
calculating (450) at least one variation (Δα) between two consecutive firing angles (α₀, α₁) previously detected;
comparing (490) said variation (Δα), or the sum of said successive variations (ΣΔα), with a threshold value (Δαₘₐₓ), where reaching or exceeding said threshold value (Δαₘₐₓ) identifies said low load condition.

2. Method according to claim 1, wherein the steps of detecting the firing angles (α₀, α₁) and calculating the corresponding variations (Δα) are repeated continuously for a measurement period (T₃) at the end of which the comparison between the sum of the variations (ΣΔα) calculated during the course of said measurement period (T₃) and the threshold value (Δαₘₐₓ) is performed.

3. Method according to claim 2, wherein said measurement period (T₃) is greater than 5 s.

4. Method according to either one of claims 2 or 3, wherein said measurement period (T₃) is less than 15 s.

5. Method according to one of the preceding claims, wherein said threshold value (Δαₘₐₓ) is predefined.

6. Method according to one of the preceding claims, wherein said low load condition corresponds to operation of the pump under zero load.

7. Method according to one of the preceding claims, wherein said low load condition corresponds to operation of the pump in air/water conditions.

8. Method according to one of the preceding claims, wherein said electric motor (1) is a permanent-magnet, single-phase, synchronous electric motor.

9. Method according to one of the preceding claims, wherein said pump is a condensate discharge pump (50).

10. Method for collecting the condensate inside an apparatus (500), said method comprising the following steps:
- providing a condensate collection system (90) comprising: a bottom collection tank (2) and a top collection tank (3); a condensate discharge pump (50) intended to displace liquid from the bottom collection tank (2) to the top collection tank (3); and an overflow system (4) which causes displacement of the liquid that is contained in the top collection tank (3) and that exceeds an overflow level into the bottom collection tank (2);
- collecting a condensed liquid during operation of said apparatus (500) in the bottom collection tank (2);
- actuating (200, 300) said condensate discharge pump (50) in order to displace said condensed liquid from the bottom collection tank (2) into the top collection tank (3);
- at the same time as the step of actuating said condensate discharge pump (50), detecting (400) a low load condition of said condensate discharge pump (50), by applying the method according to claim 8, actuation of the condensate discharge pump (50) being interrupted (550) upon detection of said low load condition;
- at the same time as the step of actuating said condensate discharge pump (50), performing (100, 600) a measurement of the actuating time (T₂) of the condensate discharge pump (50), with signalling (700) of a full condition of the condensate collection system (90) when this actuating time (T₂) reaches or exceeds a maximum time (T₂ₗᵢₘ).

11. Method according to claim 10, wherein said step of detecting a low load condition of the condensate discharge pump (50) is performed by a local control board (20) which is installed on the condensate discharge pump (50) itself.

12. Method according to claim 11, wherein said step of performing a measurement of the actuating time of the condensate discharge pump (50) is also performed by the local control board (20).

13. Method according to one of claims 10-12, wherein said step of actuating said condensate discharge pump (50) is performed cyclically during operation of the apparatus (500).

14. Method according to one of claims 10-13, wherein said maximum time (T₂ₗᵢₘ) is equal to or greater than the actuating time of the condensate discharge pump (50) needed to completely empty the bottom collection tank (2) in the fully filled condition.

15. Motor-pump assembly (1, 30, 50) comprising a pump (50), a permanent-magnet, single-phase, synchronous electric motor (1) configured for actuation thereof, and a local control board (20) configured to drive said electric motor (1), where said local control board (20) is also configured to:
detect, during actuation of the pump (50), a low load condition of said condensate discharge pump (50) by means of a method according to one of claims 1-9.

## Patentansprüche

1. Verfahren (400) zum Erfassen eines Niedriglastzustands einer durch einen Synchronelektromotor (1) betätigten Pumpe, umfassend die folgenden Schritte:
konstanter Antrieb des Elektromotors (1) mittels Phasenabschnittssteuerung, wobei ein Rückkopplungssollwert davon eine Bedingung einer minimalen Phasenverschiebung zwischen dem Strom, der die Wicklungen des Elektromotors (1) liefert, und der erzeugten gegenläufigen elektromotorischen Kraft ist;
**dadurch gekennzeichnet, dass** es weiterhin folgende Schritte umfasst:
Detektieren (430, 440) von mindestens zwei Zündwinkeln (α0, α1), die aufeinanderfolgend in Bezug auf die Phasenschnittsteuerung während zwei aufeinander folgenden Halbperioden einer den Elektromotor (1) versorgenden Spannung (T) angelegt werden;
Berechnen (450) mindestens einer Variation (Δα) zwischen zwei aufeinanderfolgenden Zündwinkeln (α₀, α₁), die zuvor detektiert wurden;
Vergleichen (490) der Variation (Δa) oder der Summe der aufeinanderfolgenden Variationen (ΣΔα) mit einem Schwellwert (Δαₘₐₓ), wobei das Erreichen oder Überschreiten des Schwellwerts (Δαₘₐₓ) die Niedriglastbedingung identifiziert.

2. Verfahren nach Anspruch 1, wobei die Schritte des Erfassens der Zündwinkel (α0, α1) und des Berechnens der entsprechenden Variationen (Δα) kontinuierlich über eine Messperiode (T₃) wiederholt werden, an deren Ende der Vergleich zwischen der Summe der Variationen (ΣΔα), die während des Verlaufs der Messperiode (T₃) berechnet wurden, und dem Schwellenwert (Δαₘₐₓ) erfolgt.

3. Verfahren nach Anspruch 2, wobei die Messperiode (T₃) größer als 5 s ist.

4. Verfahren nach einem der Ansprüche 2 oder 3, wobei die Messperiode (T₃) weniger als 15 s beträgt.

5. Verfahren nach einem der vorhergehenden Ansprüche, wobei der Schwellenwert (Δαₘₐₓ) vordefiniert ist.

6. Verfahren nach einem der vorhergehenden Ansprüche, bei dem der Niedriglastzustand einem Betrieb der Pumpe unter Nulllast entspricht.

7. Verfahren nach einem der vorhergehenden Ansprüche, wobei der Niedriglastzustand einem Betrieb der Pumpe unter Luft/Wasser-Bedingungen entspricht.

8. Verfahren nach einem der vorhergehenden Ansprüche, wobei der Elektromotor (1) ein Synchronelektromotor mit Permanentmagnet ist.

9. Verfahren nach einem der vorhergehenden Ansprüche, wobei die Pumpe eine Kondensat-Abführpumpe (50) ist.

10. Verfahren zum Sammeln des Kondensats in einer Vorrichtung (500), wobei das Verfahren die folgenden Schritte umfasst:
- Bereitstellen eines Kondensatsammelsystems (90), umfassend: einen Bodensammeltank (2) und einen oberen Sammeltank (3); eine Kondensatablasspumpe (50), die dazu bestimmt ist, Flüssigkeit von dem unteren Sammelbehälter (2) in den oberen Sammelbehälter (3) zu verdrängen; und ein Überlaufsystem (4), das eine Verdrängung der Flüssigkeit bewirkt, die in dem oberen Sammelbehälter (3) enthalten ist und die ein Überlaufniveau in den unteren Sammelbehälter (2) überschreitet;
- Sammeln einer kondensierten Flüssigkeit während des Betriebs der Vorrichtung (500) in dem unteren Sammelbehälter (2);
- Betätigen (200, 300) der Kondensatabführpumpe (50), um die kondensierte Flüssigkeit aus dem unteren Sammelbehälter (2) in den oberen Sammelbehälter (3) zu verdrängen;
- gleichzeitig mit dem Schritt des Betätigens der Kondensatausstoßpumpe (50), Detektieren (400) eines Niedriglastzustands der Kondensatausstoßpumpe (50) unter Anwendung des Verfahrens nach Anspruch 8, wobei die Betätigung der Kondensatausstoßpumpe (50) beim Detektieren der Niedriglastbedingung unterbrochen (550) wird;
- gleichzeitig mit dem Schritt des Betätigens der Kondensatablasspumpe (50), Durchführen (100, 600) einer Messung der Betätigungszeit (T₂) der Kondensatablasspumpe (50) mit Signalisierung (700) eines Vollzustands des Kondensatsammelsystems (90), wenn diese Betätigungszeit (T₂) eine maximale Zeit (T₂ₗᵢₘ) erreicht oder überschreitet.

11. Verfahren nach Anspruch 10, wobei der Schritt des Erfassens eines Niedriglastzustands der Kondensatabgabepumpe (50) durch eine lokale Steuerplatine (20) durchgeführt wird, die an der Kondensatabgabepumpe (50) selbst installiert ist.

12. Verfahren nach Anspruch 11, wobei der Schritt des Durchführens einer Messung der Betätigungszeit der Kondensatausstoßpumpe (50) auch von der lokalen Steuerplatine (20) durchgeführt wird.

13. Verfahren nach einem der Ansprüche 10 bis 12, wobei der Schritt des Betätigens der Kondensatausstoßpumpe (50) zyklisch während des Betriebs der Vorrichtung (500) durchgeführt wird.

14. Verfahren nach einem der Ansprüche 10-13, wobei die maximale Zeit (T₂ₗᵢₘ) gleich der oder größer als die Betätigungszeit der Kondensat-Abführpumpe (50) ist, die benötigt wird, um den Bodensammeltank (2) im vollständig befüllten Zustand vollständig zu entleeren.

15. Motor-Pumpenanordnung (1, 30, 50) umfassend eine Pumpe (50), einen permanenterregten, einphasigen, Synchronelektromotor (1), der zur Betätigung derselben ausgebildet ist, und eine lokale Steuerplatine (20), die zum Antreiben des Elektromotors (1) ausgebildet ist, wobei die lokale Steuerplatine (20) auch dazu ausgebildet ist, während der Betätigung der Pumpe (50) einen Niedriglastzustand der Kondensatabführpumpe (50) mittels eines Verfahrens nach einem der Ansprüche 1-9 zu detektieren.

## Revendications

1. Procédé (400) pour détecter une condition de faible charge d'une pompe actionnée par un moteur électrique synchrone (1), comprenant les étapes suivantes :
mise en régime permanent du moteur électrique (1) au moyen d'un contrôle de coupure de phase, une valeur seuil de retour de celle-ci étant une condition de déphasage minimum entre le courant alimentant les enroulements du moteur électrique (1) et la force contre-électromotrice générée ;
**caractérisé en ce qu'**il comprend en outre les étapes consistant à
détecter (430, 440) au moins deux angles d'amorçage (α₀, α₁) appliqués successivement, en relation avec le contrôle de coupure de phase, pendant deux demi-périodes successives d'une tension (T) alimentant le moteur électrique (1) ;
calculer (450) au moins une variation (Δα) entre deux angles d'amorçage consécutifs (α₀, α₁) détectés préalablement ;
comparer (490) la variation (Δα), ou la somme des variations successives (ΣΔα), à une valeur seuil (Δαₘₐₓ), dans lequel atteindre ou dépasser la valeur seuil (Δαₘₐₓ) identifie la condition de faible charge.

2. Procédé selon la revendication 1, dans lequel les étapes de détection des angles d'amorçage (α₀, α₁) et de calcul des variations correspondantes (Δα) sont répétées en continu pendant une période de mesure (T₃) à la fin de laquelle la comparaison est réalisée entre la somme des variations (ΣΔα) calculée au cours de la période de mesure (T₃) et la valeur seuil (Δαₘₐₓ).

3. Procédé selon la revendication 2, dans lequel la période de mesure (T₃) est supérieure à 5 s.

4. Procédé selon l'une ou l'autre des revendications 2 ou 3, dans lequel la période de mesure (T₃) est inférieure à 15 s.

5. Procédé selon l'une des revendications précédentes, dans lequel la valeur seuil (Δαₘₐₓ) est prédéfinie.

6. Procédé selon l'une des revendications précédentes, dans lequel la condition de faible charge correspond au fonctionnement de la pompe sous une charge nulle.

7. Procédé selon l'une des revendications précédentes, dans lequel la condition de faible charge correspond au fonctionnement de la pompe dans des conditions air/eau.

8. Procédé selon l'une des revendications précédentes, dans lequel le moteur électrique (1) est un moteur électrique synchrone monophasé à aimants permanents.

9. Procédé selon l'une des revendications précédentes, dans lequel la pompe est une pompe de d'évacuation de condensat (50).

10. Procédé pour collecter le condensat à l'intérieur d'un appareil (500), le procédé comprenant les étapes suivantes :
- mise à disposition d'un système de collecte de condensat (90) comprenant : un réservoir collecteur inférieur (2) et un réservoir collecteur supérieur (3) ; une pompe d'évacuation de condensat (50) destinée à déplacer le liquide du réservoir collecteur inférieur (2) vers le réservoir collecteur supérieur (3) ; et un système de trop-plein (4) qui provoque le déplacement dans le réservoir collecteur inférieur (2) du liquide contenu dans le réservoir collecteur supérieur (3) et qui dépasse un niveau de débordement ;
- recueil dans le réservoir collecteur inférieur (2) d'un liquide condensé pendant le fonctionnement de l'appareil (500) ;
- actionnement (200, 300) de la pompe de décharge de condensat (50) en vue de déplacer le liquide condensé du réservoir collecteur inférieur (2) dans le réservoir collecteur supérieur (3) ;
- simultanément à l'étape consistant à actionner la pompe d'évacuation de condensat (50), détection (400) d'une condition de faible charge de la pompe d'évacuation de condensat (50), en appliquant le procédé selon la revendication 8, l'actionnement de la pompe d'évacuation de condensat (50) étant interrompu (550) lors de la détection de la condition de faible charge ;
- simultanément à l'étape consistant à actionner la pompe d'évacuation de condensat (50), réalisation (100, 600) d'une mesure du temps d'actionnement (T₂) de la pompe d'évacuation de condensat (50), avec signalement (700) d'un état de niveau plein du système de collecte de condensat (90) lorsque ce temps d'actionnement (T₂) atteint ou dépasse un temps maximum (T₂ₗᵢₘ).

11. Procédé selon la revendication 10, dans lequel l'étape de détection d'une condition de faible charge de la pompe d'évacuation de condensat (50) est réalisée par une carte de commande locale (20) installée sur la pompe d'évacuation de condensat (50) elle-même.

12. Procédé selon la revendication 11, dans lequel l'étape d'exécution d'une mesure du temps d'actionnement de la pompe d'évacuation de condensat (50) est également réalisée par la carte de commande locale (20).

13. Procédé selon l'une des revendications 10 à 12, dans lequel l'étape d'actionnement de la pompe d'évacuation de condensat (50) est réalisée de façon cyclique pendant le fonctionnement de l'appareil (500).

14. Procédé selon l'une des revendications 10 à 13, dans lequel le temps maximum (T₂ₗᵢₘ) est égal ou supérieur au temps d'actionnement de la pompe d'évacuation de condensat (50) nécessaire pour vider entièrement le réservoir collecteur inférieur (2) à l'état de niveau totalement plein.

15. Ensemble moteur-pompe (1, 30, 50) comprenant une pompe (50), un moteur électrique synchrone monophasé à aimants permanents (1) destiné à son actionnement, et une carte de commande locale (20) destinée à commander le moteur électrique (1), la carte de commande locale (20) étant également destinée à :
détecter, lors du fonctionnement de la pompe (50), une condition de faible charge de la pompe d'évacuation de condensat (50) au moyen d'un procédé selon l'une des revendications 1-9.
